# DEMANDE DE BREVET EUROPEEN

(11) **EP 2 746 818 A1**
(43) Date de publication de la demande: **25.06.2014**
(21) Numéro de dépôt: 13199047.5
(22) Date de dépôt: 20.12.2013
(51) Int. Cl.: G01T 7/00

(54) **Dispositif et procédé de balisage d'une zone d'accès restreint**

(30) Priorité: 21.12.2012 FR 1262635
(71) Demandeur: Institut de Soudure, 93420 Villepinte (FR)
(72) Inventeur: Blettner, Alexis, 60150 Thourotte (FR)
(74) Mandataire: Regimbeau

(57) **Abrégé**

L'invention concerne un dispositif de balisage d'une zone d'accès restreint, comportant un émetteur (10) d'un signal d'ondes électromagnétiques (S1) et un terminal (20) portatif, muni d'un élément (22) d'alerte de la personne, apte à être actionné sur la base du signal (S1).

Suivant l'invention, l'émetteur (10) comporte un deuxième moyen (12) d'émission d'un deuxième signal d'ondes électromagnétiques (S2) qui contient au moins une première adresse (C1) de terminal, le terminal (20) ayant un moyen (MCA) de commande coopérant avec des moyens (MCC, MCD) de comparaison pour actionner l'élément (22) d'alerte lorsqu'à la fois la première adresse (C1) de terminal extraite du signal (S1) comprend l'adresse (C2) de ce terminal et une deuxième valeur (D) représentative de la distance calculée entre l'émetteur (10) et le terminal (20) est inférieure à une première valeur (DMAX) représentative d'un seuil de distance d'accès restreint.

## Description

L'invention concerne un dispositif actif immatériel et un procédé de balisage permettant de délimiter une zone de danger et d'avertir les intervenants et les tierces parties de la proximité du danger. L'invention concerne un dispositif et un procédé de balisage d'une zone d'accès restreint.

Un domaine d'application de l'invention est une zone contenant des matières dangereuses, telles que par exemple des matières radioactives. L'invention peut aussi être exploitée sur des zones générant d'autres types de danger comme par exemple : génération de rayonnements ionisants ou électromagnétiques, produits chimiques, bactériologiques, explosifs ou inflammable.

Les matières radioactives sont utilisées notamment dans les contrôles par gammagraphie, qui sont utilisés par exemple pour vérifier la qualité de soudures ayant été effectuées sur des pièces mécaniques assemblées.

Lors de tels contrôles par gammagraphie, on éjecte une matière émettant des radiations gamma afin d'effectuer par radiographie le contrôle de soudures ou d'assemblages de pièces. Ces contrôles peuvent être effectués de nuit. Dans le cas d'une centrale nucléaire, lors des arrêts de maintenance, ces contrôles sont sur le chemin critique (par des fortuits qui nécessitent des opérations de soudage supplémentaires) et entraînent un retard dans le démarrage de la centrale.

Bien entendu, des mesures de sécurité imposent de disposer autour de la zone où est effectuée la gammagraphie un balisage visuel pour délimiter la zone dans laquelle est effectuée cette gammagraphie et prévenir les personnes de ne pas y pénétrer pendant celle-ci.

Ainsi, le document EP-A-2 098 886 décrit un système de protection pour radiographie gamma prévoyant un capteur de mouvement à proximité de la source gamma pour, durant l'étape de radiographie, émettre via un réseau un signal d'intrusion vers un terminal portatif qui déclenche alors une alarme déportée d'intrusion en cas de détection de mouvements par ce capteur.

La sécurité des personnes durant une étape de gammagraphie est bien sûr un problème important.

Toutefois, un autre problème se pose avant et après l'étape de gammagraphie, à savoir d'empêcher que des personnes non autorisées ne pénètrent dans la zone balisée et faire qu'uniquement les personnes autorisées puissent y pénétrer.

Ainsi, il existe souvent plusieurs équipes de techniciens travaillant en même temps sur un site.

Un des problèmes qui se posent est que, pendant qu'une équipe de techniciens autorisée se trouve dans une zone balisée, d'autres techniciens d'une autre équipe ne doivent pas pouvoir pénétrer dans cette zone. En outre, pour améliorer la productivité sur un site, on recherche à ce que plusieurs équipes différentes de techniciens puissent travailler en même temps sur le site.

De tels sites sont par exemple les chantiers de construction de centrales nucléaires, dans lesquels il peut exister peu de créneaux horaires pour effectuer les opérations de contrôle radiographiques (lors desquelles une source de radiations gamma est éjectée pour émettre des rayons gamma vers l'extérieur) et pour l'étape préalable d'installation (dans laquelle une source de radiations gamma n'est pas éjectée pour ne pas émettre de rayons gamma vers l'extérieur) préalable à l'étape de radiographie proprement dite.

On connaît par le document US 2006/0 237 648 un système dans lequel chaque personne est munie d'un moniteur personnel ayant un détecteur de radiations et calculant à partir du détecteur un temps de séjour restant pendant lequel la personne peut rester dans la zone avant de recevoir une dose de radiation maximum. Lorsque ce temps de séjour restant ayant été calculé diminue au-dessous d'un seuil prescrit, par exemple de 30 minutes, le moniteur émet un signal d'alarme sonore par un haut-parleur, toutes les 10 secondes, et une alarme sonore toutes les 3 secondes, pour un temps de séjour de moins de 10 minutes, et une alarme sonore toutes les demi-secondes pour un temps de séjour de moins de 5 minutes. En outre, le système peut comporter un mode d'entraînement utilisant une technologie RFID qui permet à l'utilisateur de simuler la présence de radiations sans y être exposé réellement. Le moniteur peut être couplé à un récepteur radiofréquence. Une étiquette RFID peut être placée dans une zone d'entraînement pour simuler une source de radiations. Lorsque la localisation du moniteur approche de la localisation de l'étiquette RFID, le signal RF reçu augmentera d'intensité. De manière correspondante, l'unité d'affichage répondra de la même manière que dans le mode opératoire normal, excepté que les mots "mode d'entraînement" seront affichés. Un écran est également prévu sur le moniteur pour afficher le temps de séjour restant.

L'inconvénient de ce système est que le moniteur personnel indique trop tard une alarme à l'utilisateur, lorsque celui-ci a déjà reçu une partie de la dose de radiation maximum en cas d'émission de radiations par une source. En outre, le mode d'entraînement n'est pas prévu dans une zone dans laquelle a été ou va être installée une source de radiation, mais dans une zone d'entraînement. Ainsi, ce dispositif ne permet pas d'avertir uniquement les personnes non autorisées à accéder à la zone. En outre, ce mode d'entraînement n'est destiné qu'à un seul moniteur se rapprochant dans la zone d'entraînement de l'étiquette RFID et ne permet pas la gestion de plusieurs moniteurs dans des conditions réelles. Ainsi ce système, même en mode d'entraînement, ne permet pas de gérer plusieurs équipes de fonctions différentes, comme par exemple une équipe de personnes autorisées à pénétrer dans une zone lors de l'opération d'installation de la source de radiations, et une ou plusieurs autres équipes non autorisées à pénétrer dans la zone lors de l'opération d'installation de la source de radiations.

L'invention vise à améliorer les systèmes existants en proposant un dispositif et un procédé de balisage d'une zone d'accès restreint, qui permettent de résoudre les problèmes indiqués ci-dessus.

A cet effet, un premier objet de l'invention, est un dispositif de balisage d'une zone d'accès restreint, le dispositif comportant
un émetteur (10) comportant un premier moyen (11) d'émission sans fil d'au moins un premier signal d'ondes électromagnétiques (S1) et destiné à être disposé dans la zone (Z1) d'accès restreint,
au moins un terminal (20) portatif, destiné à être porté par une personne et comportant un premier moyen (21) de réception du premier signal d'ondes électromagnétiques (S1), le terminal (20) étant muni d'au moins un élément (22) d'alerte de la personne, apte à être actionné par un premier moyen (MCA) de commande sur la base au moins du premier signal d'ondes électromagnétiques reçu (S1),
caractérisé en ce que l'émetteur (10) comporte un deuxième moyen (12) d'émission d'au moins un deuxième signal d'ondes électromagnétiques (S2) qui contient au moins une première adresse (C1) de terminal,
le terminal (20) ayant une mémoire (23) dans laquelle est enregistrée au moins une deuxième adresse (C2) de terminal, au moins une première valeur (DMAX), qui est représentative d'un seuil de distance d'accès restreint étant mémorisée dans la mémoire (23) du terminal (20) et/ou dans une mémoire de l'émetteur (10),
un troisième moyen (MD) de détermination d'une deuxième valeur (D) représentative de la distance (D) existant entre le terminal (20) et l'émetteur (10) sur la base au moins du premier et/ou deuxième signal d'ondes électromagnétiques (S1, S2) transmis de l'émetteur (10) au terminal (20) étant prévu dans le terminal (20) et/ou dans l'émetteur (10),
un quatrième moyen (MA) d'analyse du deuxième signal d'ondes électromagnétiques reçu (S2) pour en extraire la première adresse (C1) de terminal étant prévu dans le terminal (20),
un cinquième moyen (MCC) de comparaison entre la deuxième adresse (C2) de terminal et la première adresse (C1) de terminal extraite du deuxième signal d'ondes électromagnétiques reçu (S2) pour déterminer si la première adresse (C1) de terminal extraite comprend la deuxième adresse (C2) de terminal étant prévu dans le terminal (20),
un sixième moyen (MCD) de comparaison entre la deuxième distance (D) ayant été déterminée et la première valeur (DMAX) étant prévu dans le terminal (20) et/ou dans l'émetteur (10),
le premier moyen (MCA) de commande coopérant avec les cinquième et sixième moyens (MCC, MCD) de comparaison pour actionner l'élément (22) d'alerte lorsqu'à la fois la première adresse (C1) de terminal extraite comprend la deuxième adresse (C2) de terminal et la deuxième valeur (D) est inférieure à la première valeur (DMAX).

Suivant un mode de réalisation de l'invention, le troisième moyen (MD) de détermination est situé dans le terminal (20) et comporte un moyen (MI) de mesure de l'intensité du premier signal d'ondes électromagnétiques reçu (S1) pour déterminer la deuxième valeur (D) représentative de la distance existant entre le terminal (20) et l'émetteur (10) à partir de cette intensité ayant été mesurée.

Suivant un mode de réalisation de l'invention, le troisième moyen (MD) de détermination est situé dans l'émetteur (10) et dans le terminal (20),
le terminal (20) comportant un septième moyen (MR) de réponse pour envoyer un troisième signal d'ondes électromagnétiques (S3) et un quatrième signal d'ondes électromagnétiques (S4) contenant la deuxième adresse (C2) de terminal à l'émetteur (10), en réponse au premier signal d'ondes électromagnétiques reçu (S1) et au fait que le cinquième moyen (MCC) de comparaison a déterminé que la première adresse (C1) de terminal extraite comprend la deuxième adresse (C2) de terminal,
le troisième moyen (MD) de détermination comportant dans l'émetteur (10) un moyen de mesure du temps (TT) de trajet des premier et troisième signaux d'ondes électromagnétiques (S1, S3) entre l'émetteur (10) et le terminal (20), et un moyen (12) d'envoi d'un cinquième signal d'ondes électromagnétiques (S5) contenant le temps (TT) de trajet ayant été mesuré et la deuxième adresse (C2) de terminal contenue dans le quatrième signal (S4) au terminal (20) en réponse au quatrième signal (S4),
le deuxième moyen (MD) de détermination comportant dans le terminal (20) un moyen (MA) d'analyse du cinquième signal d'ondes électromagnétiques reçu (S5) pour en extraire le temps (TT) de trajet ayant été mesuré pour déterminer la deuxième valeur (D) représentative de la distance existant entre le terminal (20) et l'émetteur (10) à partir de ce temps (TT) de trajet ayant été mesuré.

Suivant un mode de réalisation de l'invention, le troisième moyen (MD, MD2) de détermination est situé dans l'émetteur (10),
le terminal (20) comportant un septième moyen (MR) de réponse pour envoyer un troisième signal d'ondes électromagnétiques (S3) et un quatrième signal d'ondes électromagnétiques (S4) contenant la deuxième adresse (C2) de terminal à l'émetteur (10), en réponse au premier signal d'ondes électromagnétiques reçu (S1) et au fait que le cinquième moyen (MCC) de comparaison a déterminé que la première adresse (C1) de terminal extraite comprend la deuxième adresse (C2) de terminal,
le troisième moyen (MD, MD2) de détermination comportant un moyen (MTT) de mesure du temps (TT) de trajet des premier et troisième signaux d'ondes électromagnétiques (S1, S3) entre l'émetteur (10) et le terminal (20) pour déterminer la deuxième valeur (D) représentative de la distance existant entre le terminal (20) et l'émetteur (10) à partir de ce temps (TT) de trajet ayant été mesuré, et un moyen (12) d'envoi d'un cinquième signal d'ondes électromagnétiques (S5) contenant la deuxième valeur (D) et la deuxième adresse (C2) de terminal contenue dans le quatrième signal (S4) au terminal (20), en réponse au quatrième signal (S4),
le terminal (20) comportant un moyen (MA) d'analyse du cinquième signal d'ondes électromagnétiques reçu (S5) pour en extraire la deuxième valeur (D) associée à la deuxième adresse (C2) de terminal contenue dans ce cinquième signal d'ondes électromagnétiques reçu (S5).

Suivant un mode de réalisation de l'invention, le troisième moyen (MD) de détermination est situé dans l'émetteur (10) et dans le terminal (20),
le terminal (20) comportant un septième moyen (MR) de réponse pour envoyer un troisième signal d'ondes électromagnétiques (S3) et un quatrième signal d'ondes électromagnétiques (S4) contenant la deuxième adresse (C2) de terminal à l'émetteur (10), en réponse au premier signal d'ondes électromagnétiques reçu (S1) et au fait que le cinquième moyen (MCC) de comparaison a déterminé que la première adresse (C1) de terminal extraite comprend la deuxième adresse (C2) de terminal,
l'émetteur (10) comportant la mémoire dans laquelle est enregistrée la première valeur (DMAX), le troisième moyen (MD) de détermination de la deuxième valeur (D) représentative de la distance (D) existant entre le terminal (20) et l'émetteur (10) et le sixième moyen (MCD) de comparaison entre la deuxième distance (D) ayant été déterminée et la première valeur (DMAX), apte à générer une commande d'actionnement dans le cas où la deuxième valeur (D) est inférieure à la première valeur (DMAX),
le troisième moyen (MD) de détermination comportant dans l'émetteur (10) un moyen de mesure du temps (TT) de trajet des premier et troisième signaux d'ondes électromagnétiques (S1, S3) entre l'émetteur (10) et le terminal (20),
le troisième moyen (MD) de détermination dans l'émetteur (10) étant apte à déterminer la deuxième valeur (D) représentative de la distance existant entre le terminal (20) et l'émetteur (10) à partir du temps (TT) de trajet ayant été mesuré,
l'émetteur (10) ayant un moyen (12) d'envoi d'un cinquième signal d'ondes électromagnétiques (S5) contenant la commande d'actionnement et la deuxième adresse (C2) de terminal contenue dans le quatrième signal (S4) au terminal (20) en réponse au quatrième signal (S4) et au fait que la deuxième valeur (D) est inférieure à la première valeur (DMAX),
le premier moyen (MCA) de commande comportant dans le terminal (20) un moyen (MA) d'analyse du cinquième signal d'ondes électromagnétiques reçu (S5) pour en extraire la commande d'actionnement et la deuxième adresse (C2) de terminal contenue dans le quatrième signal (S4) et pour actionner l'élément (22) d'alerte lorsque la commande d'actionnement et la deuxième adresse (C2) de terminal sont présentes dans le quatrième signal (S4).

Suivant un mode de réalisation de l'invention, le troisième moyen (MD) de détermination est situé dans le terminal (20) et dans l'émetteur (10) et comporte dans le terminal (20) un moyen (MI) de mesure de l'intensité du premier signal d'ondes électromagnétiques reçu (S1) et un septième moyen (MR) de réponse pour envoyer un quatrième signal d'ondes électromagnétiques (S4) contenant l'intensité ayant été mesurée du premier signal d'ondes électromagnétiques reçu (S1) et la deuxième adresse (C2) de terminal à l'émetteur (10), en réponse au premier signal d'ondes électromagnétiques reçu (S1) et au fait que le cinquième moyen (MCC) de comparaison a déterminé que la première adresse (C1) de terminal extraite comprend la deuxième adresse (C2) de terminal,
l'émetteur (10) comportant un moyen (15) d'analyse du quatrième signal d'ondes électromagnétiques (S4) pour en extraire l'intensité ayant été mesurée,
le troisième moyen (MD2) de détermination dans l'émetteur (10) étant apte à déterminer la deuxième valeur (D) représentative de la distance existant entre le terminal (20) et l'émetteur (10) à partir de l'intensité ayant été mesurée,
l'émetteur (10) comportant la mémoire dans laquelle est enregistrée la première valeur (DMAX), et le sixième moyen (MCD) de comparaison entre la deuxième distance (D) ayant été déterminée et la première valeur (DMAX), apte à générer une commande d'actionnement dans le cas où la deuxième valeur (D) est inférieure à la première valeur (DMAX),
l'émetteur (10) ayant un moyen (12) d'envoi d'un cinquième signal d'ondes électromagnétiques (S5) contenant la commande d'actionnement et la deuxième adresse (C2) de terminal contenue dans le quatrième signal (S4) au terminal (20) en réponse au quatrième signal (S4) et au fait que la deuxième valeur (D) est inférieure à la première valeur (DMAX),
le premier moyen (MCA) de commande comportant dans le terminal (20) un moyen (MA) d'analyse du cinquième signal d'ondes électromagnétiques reçu (S5) pour en extraire la commande d'actionnement et la deuxième adresse (C2) de terminal contenue dans le quatrième signal (S4) et pour actionner l'élément (22) d'alerte lorsque la commande d'actionnement et la deuxième adresse (C2) de terminal sont présentes dans le quatrième signal (S4).

Suivant un mode de réalisation de l'invention, le troisième moyen (MD) de détermination est situé dans le terminal (20) et dans l'émetteur (10) et comporte dans le terminal (20) un moyen (MI) de mesure de l'intensité du premier signal d'ondes électromagnétiques reçu (S1) et un septième moyen (MR) de réponse pour envoyer un quatrième signal d'ondes électromagnétiques (S4) contenant l'intensité ayant été mesurée du premier signal d'ondes électromagnétiques reçu (S1) et la deuxième adresse (C2) de terminal à l'émetteur (10), en réponse au premier signal d'ondes électromagnétiques reçu (S1) et au fait que le cinquième moyen (MCC) de comparaison a déterminé que la première adresse (C1) de terminal extraite comprend la deuxième adresse (C2) de terminal,
l'émetteur (10) comportant un moyen (15) d'analyse du quatrième signal d'ondes électromagnétiques (S4) pour en extraire l'intensité ayant été mesurée,
le troisième moyen (MD2) de détermination dans l'émetteur (10) étant apte à déterminer la deuxième valeur (D) représentative de la distance existant entre le terminal (20) et l'émetteur (10) à partir de l'intensité ayant été mesurée,
l'émetteur (10) ayant un moyen (12) d'envoi d'un cinquième signal d'ondes électromagnétiques (S5) contenant la deuxième valeur (D) ayant été déterminée et la deuxième adresse (C2) de terminal contenue dans le quatrième signal (S4) en réponse au quatrième signal (S4),
le terminal (20) comportant la mémoire (23) dans laquelle est enregistrée la première valeur (DMAX), un moyen (MA) d'analyse pour extraire du cinquième signal d'ondes électromagnétiques (S5) la deuxième valeur (D) associée à la deuxième adresse (C2) de terminal dans le quatrième signal (S4) et le sixième moyen (MCD) de comparaison entre la deuxième distance (D) ayant été déterminée et la première valeur (DMAX).

Suivant un mode de réalisation de l'invention, le premier moyen (MCA) de commande coopère avec les cinquième et sixième moyens (MCC, MCD) de comparaison pour ne pas actionner l'élément (22) d'alerte de la personne lorsque la première adresse (C1) de terminal extraite ne comprend pas la deuxième adresse (C2) de terminal.

Suivant un mode de réalisation de l'invention, le premier moyen (MCA) de commande coopère avec les cinquième et sixième moyens (MCC, MCD) de comparaison pour ne pas actionner l'élément d'alerte de la personne lorsque la deuxième valeur (D) est supérieure à la première valeur (DMAX).

Suivant un mode de réalisation de l'invention, une pluralité de terminaux (20) sont prévus, chaque deuxième adresse (C2) de terminal enregistrée dans la mémoire de chaque terminal (20) étant individuelle à ce terminal et étant différente de celles des autres terminaux (20).

Suivant un mode de réalisation de l'invention, le deuxième signal d'ondes électromagnétiques (S2) contient comme première adresse (C1) de terminal plusieurs premières adresses (C1) de terminal différentes.

Suivant un mode de réalisation de l'invention, il est prévu, comme terminal, au moins un terminal, appelé premier terminal (20), comportant dans sa mémoire (23) la deuxième adresse (C2) de terminal comprise dans la première adresse (C1) de terminal, et au moins un autre terminal, appelé deuxième terminal (120) comportant dans sa mémoire (23) la deuxième adresse (C2) de terminal non comprise dans la première adresse (C1) de terminal.

Un deuxième objet de l'invention est un procédé de balisage d'une zone (Z1) d'accès restreint à l'aide du dispositif de balisage tel que décrit ci-dessus, procédé dans lequel
l'émetteur (10) disposé dans la zone (Z1) d'accès restreint émet sans fil au moins un premier signal d'ondes électromagnétiques (S1),
le terminal (20) portatif porté par une personne reçoit le premier signal d'ondes électromagnétiques (S1),
caractérisé en ce que l'émetteur (10) émet au moins un deuxième signal d'ondes électromagnétiques (S2) qui contient au moins une première adresse (C1) de terminal,
le terminal (20) ayant une mémoire (23) dans laquelle est préenregistrée au moins une deuxième adresse (C2) de terminal, au moins une première valeur (DMAX), qui est représentative d'un seuil de distance d'accès restreint étant préenregistrée dans la mémoire (23) du terminal (20) et/ou dans une mémoire de l'émetteur (10),
le terminal (20) et/ou l'émetteur (10) détermine une deuxième valeur (D) représentative de la distance (D) existant entre le terminal (20) et l'émetteur (10) sur la base au moins du premier signal d'ondes électromagnétiques (S1) transmis de l'émetteur (10) au terminal (20),
le terminal (20) analyse le deuxième signal d'ondes électromagnétiques reçu (S2) pour en extraire la première adresse (C1) de terminal,
le terminal (20) effectue une comparaison entre la deuxième adresse (C2) de terminal et la première adresse (C1) de terminal extraite du premier signal d'ondes électromagnétiques reçu (S1) pour déterminer si la première adresse (C1) de terminal extraite comprend la deuxième adresse (C2) de terminal,
le terminal (20) et/ou dans l'émetteur effectue une comparaison entre la deuxième distance (D) ayant été déterminée et la première valeur (DMAX),
le terminal (20), ayant un élément (22) d'alerte pour la personne, actionne cet élément (22) d'alerte lorsqu'à la fois la première adresse (C1) de terminal extraite comprend la deuxième adresse (C2) de terminal et la deuxième valeur (D) est inférieure à la première valeur (DMAX).

L'invention sera mieux comprise à la lecture de la description qui va suivre, donnée uniquement à titre d'exemple non limitatif, en référence aux dessins annexés, sur lesquels :
- la figure 1 est un schéma montrant une zone d'accès restreint, dans laquelle est placé un dispositif de balisage suivant l'invention,
- la figure 2 représente un synoptique modulaire d'un émetteur et d'un terminal suivant un premier mode de réalisation de l'invention,
- la figure 3 représente un synoptique modulaire d'un émetteur et d'un terminal suivant un deuxième mode de réalisation de l'invention,
- la figure 4 représente des chronogrammes de signaux échangés entre l'émetteur et le terminal suivant la figure 3.

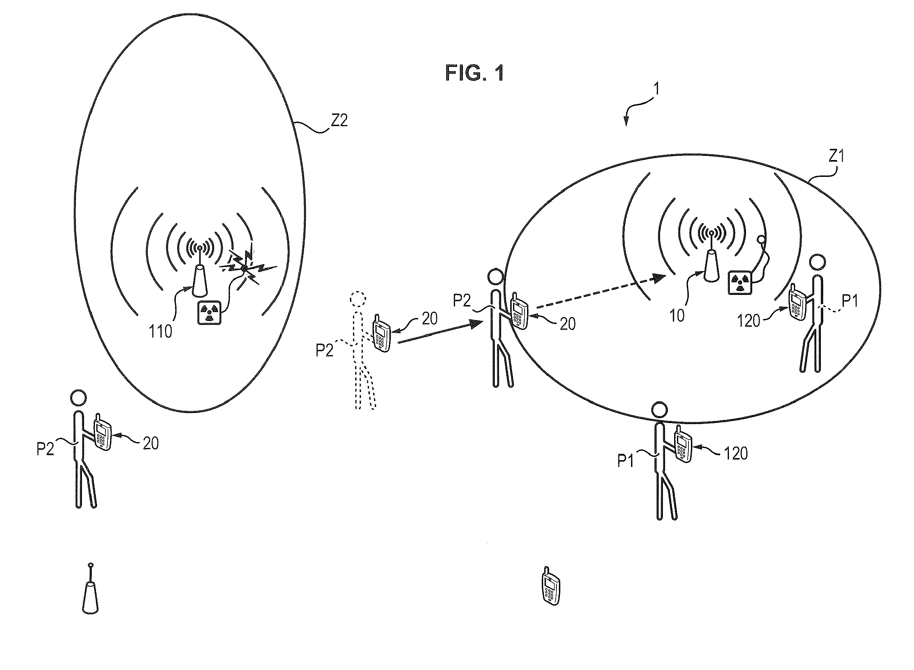

A la figure 1, le dispositif 1 de balisage est prévu pour baliser une zone Z1 d'accès restreint, située par exemple sur un site industriel, par exemple dans une centrale nucléaire ou autre. Il peut être prévu plusieurs zones Z1, Z2 d'accès restreint.

Le dispositif 1 comporte pour la zone Z1 un émetteur 10 comportant un premier moyen 11 d'émission sans fil d'au moins un premier signal d'ondes électromagnétiques S1. Il peut être prévu au moins un émetteur 10 pour la zone Z1. L'émetteur 10 est disposé dans la zone Z1 d'accès restreint. L'émetteur est également appelé balise. Il peut être prévu un autre émetteur 110 disposé dans l'autre zone Z2 d'accès restreint. Le dispositif 1 de balisage comporte également au moins un terminal portatif 20 porté par une personne. Le terminal 20 peut comporter un moyen de fixation à une partie du corps d'une personne ou à un vêtement d'une personne, comme par exemple une pince, un bracelet, un collier, ou autres, ou le terminal 20 peut faire partie d'un vêtement pour une personne. Le terminal 20 comporte un premier moyen 21 de réception du premier signal d'ondes électromagnétiques S1. Le terminal 20 comporte au moins un élément 22 d'alerte de la personne, cet élément 22 d'alerte étant actionné par un premier moyen MCA de commande sur la base au moins du premier signal d'ondes électromagnétiques reçu S1.

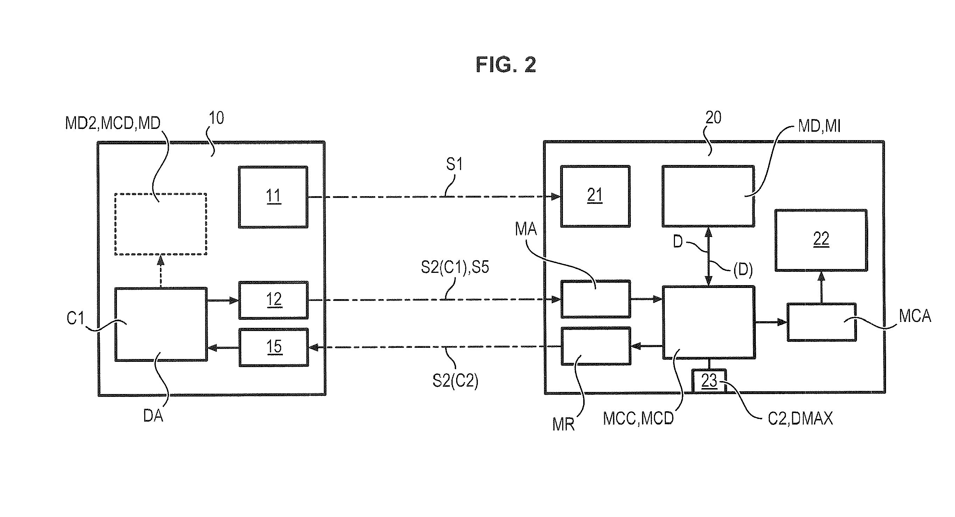

Suivant un premier mode de réalisation de l'invention représenté à la figure 2, l'émetteur 10 comporte un deuxième moyen 12 d'émission d'au moins un deuxième signal radio S2 qui contient au moins une première adresse C1 de terminal. L'émetteur 10 comporte par exemple à cet effet une mémoire et/ou un dispositif d'adressage DA où est préenregistré la ou les premières adresses C1. Le terminal 20 comporte une mémoire 23 dans laquelle est enregistrée au moins une deuxième adresse C2 de terminal, ainsi qu'au moins une première valeur DMAX représentative d'un seuil de distance d'accès restreint à la zone Z1 dans laquelle se trouve l'émetteur 10. Un troisième moyen MD est prévu dans le terminal 20 pour déterminer une deuxième valeur D représentative de la distance existant entre ce terminal 20 et l'émetteur 10 sur la base au moins du premier signal d'ondes électromagnétiques S1 transmis de l'émetteur 10 à ce terminal 20. Ce troisième moyen MD de détermination de la valeur D peut également être prévu dans l'émetteur 10. Ce moyen MD de détermination de la valeur D peut également être prévu dans le terminal 20 et dans l'émetteur 10.

Le terminal 20 comporte un quatrième moyen MA pour analyser le deuxième signal d'ondes électromagnétiques reçu S2 pour en extraire la première adresse C1. Un cinquième moyen MCC de comparaison dans le récepteur compare alors la deuxième adresse C2 et la première adresse C1 extraites du signal S1, afin de déterminer si cette première adresse C1 envoyée par l'émetteur 10 comprend la deuxième adresse C2 du terminal 20. Un sixième moyen MCD de comparaison est également prévu dans le terminal 20 pour comparer la deuxième distance D ayant été déterminée et la première valeur DMAX. Le moyen MCA de commande coopère avec ces cinquième et sixième moyens MCC, MCD de comparaison pour actionner l'élément 22 d'alerte lorsqu'à la fois la première adresse C1 comprend la deuxième adresse C2 et la deuxième valeur D est inférieure à la première valeur DMAX.

Le fait que la première adresse C1 envoyée par l'émetteur 10 comprend la deuxième adresse C2 du terminal 20 signifie que ce terminal 20 est associé ou accordé à cet émetteur 10. Il peut être prévu plusieurs terminaux 20 différents pour plusieurs personnes différentes, ces terminaux 20 étant associés à un même émetteur 10, ainsi que cela est représenté à la figure 1 pour la zone Z1. Dans ce cas, le signal S2 envoyé par l'émetteur 10 comprend comme première adresse C1, plusieurs premières adresses C1 de terminal différentes. De leur côté, les différents terminaux 20 comportent chacun dans leur mémoire 23 une deuxième adresse C2 individuelle à ce terminal, qui est différente d'un terminal 20 à l'autre. Ainsi, un ou plusieurs terminaux 20 peuvent être adressés par le même émetteur 10, par le fait que ce ou ces terminaux 20 ont leur deuxième adresse C2 égale à l'une des adresses C1 contenues dans le signal S2 envoyé par cet émetteur 10.

Par conséquent, pour la zone Z1, chaque terminal 20 n'actionne son élément 22 d'alerte que lorsque ce terminal 20 est adressé par l'émetteur 10 de cette zone Z1 et lorsque le terminal 20 se trouve à moins de la distance DMAX prescrite de cet émetteur 10. La zone Z1 d'accès restreint est donc délimitée par un cercle centré sur l'émetteur 10 et de rayon égal à la distance DMAX prescrite et permet d'alerter les personnes portant les terminaux 20 qu'elles ne sont pas autorisées à y pénétrer. Ainsi, les terminaux 20, associés à l'émetteur 10 de la manière indiquée ci-dessus, peuvent être des terminaux d'une équipe qui n'est pas autorisée à pénétrer dans la zone Z1. En revanche, peuvent être prévus un ou plusieurs autres terminaux 120 analogues au terminal 20 mais ayant dans leur mémoire 23 une deuxième adresse C2 de terminal qui n'est pas contenue dans la première adresse C1 envoyée par l'émetteur 10 de la zone Z1. Ce ou ces terminaux 120 sont par exemple ceux de personnes d'une équipe qui sont autorisées à pénétrer dans la zone Z1, par exemple pour y effectuer des travaux. Ainsi, le cinquième moyen MCC de comparaison de ce ou ces terminaux 120 déterminera que la première adresse C1 envoyée par l'émetteur 10 de la zone Z1 ne comprend pas leur deuxième adresse C2 de terminal, ce qui fait que leur élément 22 d'alerte ne sera pas actionné lorsqu'ils pénétreront dans la zone Z1 à une distance D inférieure à la valeur DMAX. Dans un cas d'application possible, l'émetteur 10 est placé dans la zone Z1 dans laquelle doit être effectuée par une première équipe P1 de personnes portant chacune un terminal 120 une opération dans cette zone Z1, comme par exemple la pose d'une cassette radiographique par rayons gamma, lors de laquelle la source de radiations, certes, n'est pas éjectée et n'émet donc pas de radiations gamma, mais lors de laquelle aucune autre personne P2 n'appartenant pas à cette première équipe ne doit pénétrer dans la zone Z1. En effet, dans le cas de ces opérations de radiographie dans une centrale nucléaire, il peut être prévu une deuxième équipe de deuxièmes personnes P2 affectée à d'autres tâches sur une autre zone, telles que, par exemple, la zone Z2. Le danger est que, même lorsque la source de radiations n'est pas éjectée, c'est-à-dire même en dehors des périodes de radiographie, les personnes P2 non autorisées à se trouver dans la zone Z1 ne doivent pas y pénétrer, car, alors que cette zone Z1 est désertée par les personnes P1 de la première équipe pendant les périodes de radiographie, les personnes P2 risqueraient de s'y trouver par accident, ce qui risquerait de les exposer à des radiations. En effet, les personnes P2 de la deuxième équipe peuvent être affectées à l'installation d'une autre source de radiations de gammagraphie dans l'autre zone Z2 et peuvent malgré tout confondre les zones Z1 et Z2 du fait du balisage visuel similaire habituellement prévu aux abords de ces zones, comprenant des bandes fluorescentes ou autres, le balisage visuel pouvant être du même aspect pour toutes les zones. L'invention permet donc de sécuriser chaque zone pour les personnes qui n'y sont pas affectées tout en permettant aux personnes qui y sont affectées d'être sûres qu'elles peuvent y pénétrer. L'invention permet ainsi de faire travailler en même temps plusieurs équipes de fonctions différentes sur le même site.

Dans le cas où encore une troisième équipe de personnes ou plus affectées à une troisième activité est prévue, le terminal de chaque personne de cette autre équipe est également associé à l'émetteur 10 de la zone Z1, de la même manière que pour le ou les terminaux 120 des personnes P1, afin qu'elles soient également alertées lorsqu'elles se trouvent dans cette zone Z1. Ainsi, dans un exemple d'application, l'émetteur 10 est associé à une source de radiations gamma de contrôle radiographique ou à un dispositif prévu pour émettre des radiations gamma de contrôle radiographique, en y étant par exemple fixé. L'émetteur est par exemple placé à proximité de la source radioactive.

Les signaux d'ondes électromagnétiques peuvent résulter de l'un et/ou l'autre des phénomènes physiques comme : les radios fréquence, les ultraviolets, les infrarouges, le rayonnement gamma, etc. Les signaux sont dans une disposition privilégiée de l'invention générés au moyen d'un signal radio dans une bande de fréquence supérieure à 300 MHz et inférieure à 30 GHz. Cette bande de fréquence peut être supérieure à 400 MHz et inférieure à 3 GHz. Cette bande de fréquence peut être par exemple entre 400 et 600 MHz, et/ou entre 700 et 1000 MHz et/ou entre 2 et 3 GHz.

Les signaux S1 et S2 peuvent être sur des canaux de fréquence différents dans la même bande de fréquence indiquée ci-dessus. Dans un autre mode de réalisation, les signaux S1 et S2 sont identiques. Dans ce cas, les signaux S1 et S2 sont formés par un même signal sur un seul canal de communication.

Dans le premier mode de réalisation représenté à la figure 2, le troisième moyen MD de détermination est situé dans le terminal 20. Le troisième moyen MD de détermination de la valeur D de distance comporte un moyen MI de mesure de l'intensité du premier signal d'ondes électromagnétiques reçu S1 pour déterminer à partir de cette intensité ayant été mesurée par ce moyen MI la deuxième valeur D représentative de la distance existant entre le terminal 20 et l'émetteur 10. Dans ce mode de réalisation, l'intensité du premier signal S1 reçu par le terminal 20 est une fonction décroissante de la distance réelle D entre l'émetteur 10 et le terminal 20.

Suivant un mode de réalisation, représenté à la figure 2, le troisième moyen (MD) de détermination est situé dans le terminal (20) et comporte un moyen de mesure du temps (TT) de trajet du premier et/ou deuxième signal d'ondes électromagnétiques (S1, S2) entre l'émetteur (10) et le terminal (20) à partir d'une même référence temporelle présente dans l'émetteur (10) et le terminal (20) et synchronisée entre l'émetteur (10) et le terminal (20),
le premier et/ou deuxième signal d'ondes électromagnétiques (S1, S2) contenant en outre un premier indicateur temporel indiquant l'instant d'émission de ce premier et/ou deuxième signal S1, S2),
le moyen de mesure du temps (TT) de trajet comportant dans le terminal (20) un moyen (MA) d'analyse du premier et/ou deuxième signal d'ondes électromagnétiques (S1, S2) reçu pour en extraire le premier indicateur temporel, ainsi qu'un moyen de détermination d'un deuxième indicateur temporel indiquant l'instant de réception du premier et/ou deuxième signal d'ondes électromagnétiques (S1, S2) contenant le premier indicateur temporel, pour déterminer la deuxième valeur (D) représentative de la distance existant entre le terminal (20) et l'émetteur (10) à partir des premier et deuxième indicateurs temporels.

Suivant un mode de réalisation, le moyen de mesure du temps (TT) de trajet calcule le temps TT de trajet du premier et/ou deuxième signal d'ondes électromagnétiques (S1, S2) à partir de la différence calculée entre l'instant de réception du premier et/ou deuxième signal d'ondes électromagnétiques (S1, S2) et l'instant d'émission de ce premier et/ou deuxième signal d'ondes électromagnétiques (S1, S2) contenant le premier indicateur temporel.

Suivant un mode de réalisation, le premier indicateur temporel est produit par exemple par un premier compteur temporel présent dans l'émetteur et/ou une première horloge présente dans l'émetteur, ce premier compteur et/ou horloge étant incrémenté à des instants réguliers multiples d'une première subdivision temporelle prédéterminée, par exemple à l'aide d'un premier oscillateur fournissant cette première subdivision temporelle prédéterminée (oscillant à une première fréquence d'oscillation correspondante) et présent dans l'émetteur 10.

Suivant un mode de réalisation, le deuxième indicateur temporel est produit par exemple par un deuxième compteur temporel présent dans le terminal et/ou une deuxième horloge présente dans le terminal, ce deuxième compteur et/ou horloge étant incrémenté à des instants réguliers multiples d'une deuxième subdivision temporelle prédéterminée, par exemple à l'aide d'un deuxième oscillateur fournissant cette deuxième subdivision temporelle prédéterminée (oscillant à une deuxième fréquence d'oscillation correspondante) et présent dans le terminal 20.

Suivant un mode de réalisation, la première subdivision temporelle prédéterminée (ou première fréquence d'oscillation correspondante) peut être identique ou différente de la deuxième subdivision temporelle prédéterminée (ou deuxième fréquence d'oscillation correspondante).

Suivant un mode de réalisation, pouvant être appliqué à ce qui précède et à ce qui suit, le premier signal S1 et le deuxième signal S2 sont un seul et même signal. Dans ce cas, les signaux S1 et S2 sont confondus. Ce signal S1=S2 contient à la fois ce que contient le signal S1 et ce que contient le signal S2.

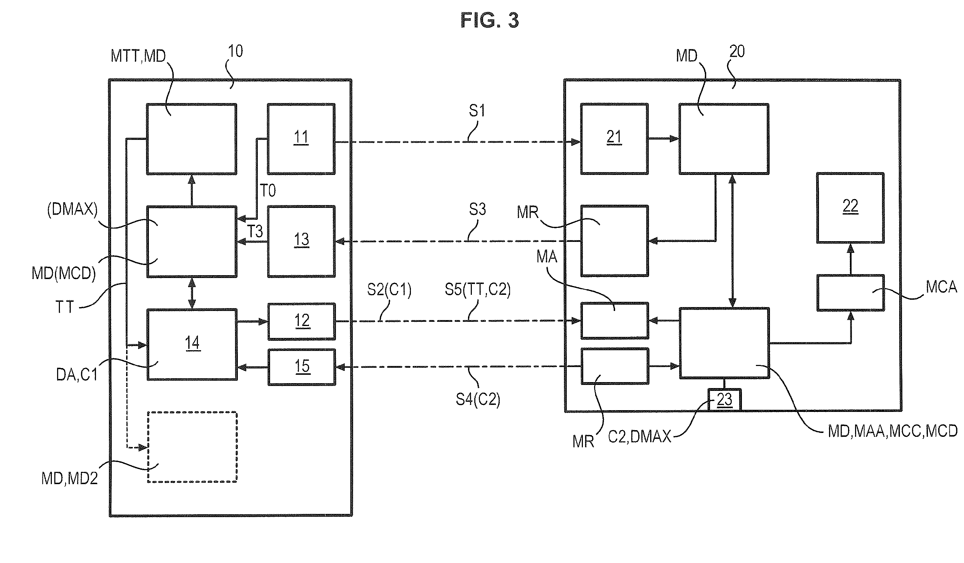

Un deuxième mode de réalisation, représenté à la figure 3, est analogue à celui de la figure 2, modifié par les caractéristiques suivantes. Dans ce deuxième mode de réalisation, le troisième moyen MD de détermination de la deuxième valeur D de distance entre l'émetteur 10 et le terminal 20 est situé dans l'émetteur 10 et dans le terminal 20. Le terminal 20 comporte un septième moyen MR de réponse pour envoyer à l'émetteur 10, en réponse au premier signal d'ondes électromagnétiques reçu S1 et au fait que le cinquième moyen MCC de comparaison a déterminé que la première adresse C1 de terminal comprend la deuxième adresse C2 de terminal extraite du premier signal d'ondes électromagnétiques reçu S1, un troisième signal d'ondes électromagnétiques S3 et un quatrième signal d'ondes électromagnétiques S4 contenant la deuxième adresse C2 du récepteur 20. L'émetteur 10 comporte un moyen 15 de réception du quatrième signal S4. Le troisième signal S3 est envoyé du terminal 20 à l'émetteur 10 où il est reçu par un moyen 13 de réception. Le troisième moyen MD de détermination comporte dans l'émetteur 10 un moyen MTT de mesure du temps TT de trajet des signaux S1 et S3 entre l'émetteur 10 et le terminal 20. Un moyen 14 prévu dans l'émetteur 10 reçoit le temps de trajet TT ayant été mesuré pour l'envoyer dans un cinquième signal d'ondes électromagnétiques S5 par le moyen 12 d'émission au terminal 20. Ce cinquième signal d'ondes électromagnétiques S5 contient également la deuxième adresse C2 de terminal contenue dans le quatrième signal S4. Le deuxième moyen MD de détermination comporte dans le terminal 20 un moyen MAA d'analyse du cinquième signal d'ondes électromagnétiques reçu S5 pour en extraire le temps TT de trajet et pour déterminer la deuxième valeur D représentative de la distance existant entre le terminal 20 et l'émetteur 10 à partir de ce temps de trajet TT.

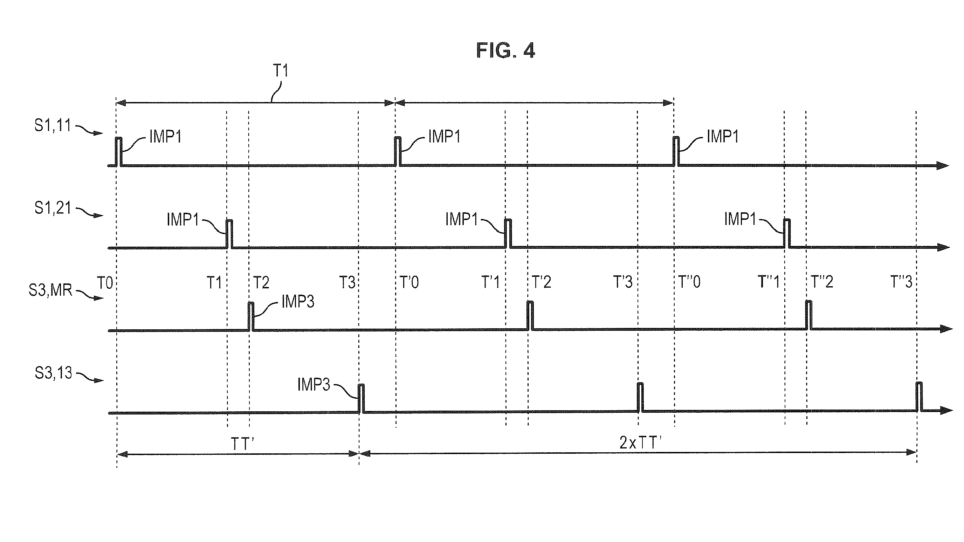

La figure 4 représente des chronogrammes, de haut en bas, du signal S1 émis par le moyen 11 de l'émetteur 10, du signal S1 reçu par le moyen 21 du terminal 20, du signal S3 émis par le moyen MR du terminal 20 et du signal S3 reçu par le moyen 13 de l'émetteur 10. Le signal S1 et/ou le signal S3 est par exemple impulsionnel. Le premier signal S1 comporte par exemple une première impulsion IMP1 qui se répète par exemple à une période T1 en ayant son front montant émis aux instants t0, t'0, t"0, .... La première impulsion IMP1 du signal S1 est reçue par le moyen 21 aux instants t1, t'1, t"1, .... Le moyen MR de l'émetteur 10 répond au signal S1 reçu en émettant le signal S3 ayant une impulsion IMP3 dont le front montant est émis aux instants t2, t'2, t"2, ..., en réponse à l'impulsion IMP1. Le temps t2 - t1 représente le temps de réaction du terminal 20 pour envoyer l'impulsion IMP3 après avoir reçu l'impulsion IMP1. L'impulsion IMP3 du signal S3 est reçue par le moyen 13 du terminal 20 aux instants t3, t'3, t"3, .... L'émetteur 10 mesure le temps TT' entre le front montant de l'impulsion IMP3 reçue et le front montant de l'impulsion IMP1 émise, c'est-à-dire que TT' = t3 - t0. Le temps de trajet TT est calculé en soustrayant de TT' le temps de réaction t2 - t1 du terminal 20, qui peut être déterminé à l'avance et avoir été préenregistré. Bien entendu, le temps TT' peut être calculé sur plusieurs périodes. La distance D est calculée à partir du temps TT et de la vitesse de propagation des signaux, ayant été préenregistrée dans le terminal 20.

Un troisième mode de réalisation, représenté à la figure 3, est analogue au deuxième mode de réalisation, modifié par les caractéristiques suivantes. Dans ce troisième mode de réalisation, représenté en traits interrompus à la figure 3, l'émetteur 10 détermine lui-même par un moyen MD2 la deuxième valeur D de distance entre l'émetteur 10 et le terminal 20 à partir du temps TT de trajet ayant été déterminé. Les moyens MD, MD2 de détermination de la valeur D de distance sont donc situés dans l'émetteur 10. La distance D est calculée à partir du temps TT et de la vitesse de propagation des signaux, ayant été préenregistrée dans l'émetteur 10. Le signal S5 émis contient la deuxième valeur D de distance ayant été calculée. Le terminal 20 analyse par son moyen MA le cinquième signal d'ondes électromagnétiques reçu S5 pour en extraire la deuxième valeur D associée à la deuxième adresse C2 de terminal contenue dans ce cinquième signal d'ondes électromagnétiques reçu S5.

Un quatrième mode de réalisation, représenté à la figure 3, est analogue au troisième mode de réalisation, modifié par les caractéristiques suivantes. Dans ce quatrième mode de réalisation, représenté par les parenthèses à la figure 3, la première valeur DMAX représentative du seuil de distance d'accès restreint est mémorisée dans une mémoire de l'émetteur 10, lequel comporte le moyen MD, MD2 de détermination de la valeur D de distance ainsi que le sixième moyen MCD de comparaison entre la deuxième distance D ayant été déterminée et cette première valeur DMAX. Dans le cas où la valeur D est inférieure à la valeur DMAX, l'émetteur 10 émet dans ce cas dans le signal S5, en association avec la deuxième adresse C2 du terminal 20 une commande d'actionnement de l'élément 23 d'alerte du terminal 20, lequel, en réponse à la réception de cette commande d'activation présente avec sa deuxième adresse C2 dans ce signal S5 (analysé par le moyen MA du terminal 20 pour les extraire), actionne par son premier moyen MCA de commande l'élément 22 d'alerte.

L'élément 22 d'alerte peut être visuel et/ ou sonore et/ou vibratoire. A cet effet, le terminal 20 peut comporter un ou plusieurs haut-parleurs et/ou un ou plusieurs écrans ou dispositifs d'affichage et/ou un ou plusieurs voyants lumineux et/ou un ou plusieurs éléments vibrants. L'actionnement de l'élément 22 d'alerte est par exemple l'émission d'un son continu ou la répétition d'un son. Ce son peut avoir une intensité qui est une fonction décroissante de la distance D.

Les moyens MAA, MCC, MCD, 14, DA peuvent être mis en oeuvre en ayant un moyen de transmission numérique avec adressage. Le moyen MCA peut comporter un dispositif d'affichage de la distance D. Les signaux S2, S4 et S5 sont par exemple des signaux numériques de données. Les signaux S1 et S3 sont par exemple des signaux continus.

Un cinquième mode de réalisation, représenté à la figure 2, est analogue au premier mode de réalisation, modifié par les caractéristiques suivantes. Dans ce cinquième mode de réalisation, représenté par les traits interrompus à la figure 2, le troisième moyen MD de détermination est situé dans le terminal 20 et dans l'émetteur 10. Dans le terminal 20 est prévu le moyen MI de mesure de l'intensité du premier signal d'ondes électromagnétiques reçu S1 et un septième moyen MR de réponse pour envoyer un quatrième signal d'ondes électromagnétiques S4 contenant l'intensité ayant été mesurée du premier signal d'ondes électromagnétiques reçu S1 et la deuxième adresse C2 de terminal à l'émetteur 10, en réponse au premier signal d'ondes électromagnétiques reçu S1 et au fait que le cinquième moyen MCC de comparaison a déterminé que la première adresse C1 de terminal extraite comprend la deuxième adresse C2 de terminal. L'émetteur 10 extrait par son moyen 15 d'analyse le quatrième signal d'ondes électromagnétiques S4 pour en extraire cette intensité ayant été mesurée par le moyen MI. Le troisième moyen MD2 de détermination situé dans l'émetteur 10 détermine la deuxième valeur D représentative de la distance existant entre le terminal 20 et l'émetteur 10 à partir de l'intensité ayant été mesurée, transmise dans le signal S4 reçu par le moyen 15 de l'émetteur 10. L'émetteur 10 a la mémoire dans laquelle est enregistrée la première valeur DMAX, et possède également le sixième moyen MCD de comparaison entre la deuxième distance D ayant été déterminée et la première valeur DMAX, pour générer une commande d'actionnement dans le cas où la deuxième valeur D est inférieure à la première valeur DMAX. L'émetteur 10 a un moyen 12 d'envoi d'un cinquième signal d'ondes électromagnétiques S5 contenant la commande d'actionnement et la deuxième adresse C2 de terminal contenue dans le quatrième signal S4 au terminal 20 en réponse au quatrième signal S4 et au fait que la deuxième valeur D est inférieure à la première valeur DMAX. Le premier moyen MCA de commande dans le terminal 20 analyse par le moyen MA le cinquième signal d'ondes électromagnétiques reçu S5 pour en extraire la commande d'actionnement et la deuxième adresse C2 de terminal contenue dans le quatrième signal S4 et pour actionner l'élément 22 d'alerte lorsque la commande d'actionnement et la deuxième adresse C2) de terminal sont présentes dans le quatrième signal S4.

Un sixième mode de réalisation, représenté à la figure 2, est analogue au premier mode de réalisation, modifié par les caractéristiques suivantes. Dans ce sixième mode de réalisation, représenté par les traits interrompus à la figure 2, le troisième moyen MD de détermination est situé dans le terminal 20 et dans l'émetteur 10. Il est prévu dans le terminal 20 le moyen MI de mesure de l'intensité du premier signal d'ondes électromagnétiques reçu S1 et un septième moyen MR de réponse pour envoyer un quatrième signal d'ondes électromagnétiques S4 contenant l'intensité ayant été mesurée du premier signal d'ondes électromagnétiques reçu S1 et la deuxième adresse C2 de terminal à l'émetteur 10, en réponse au premier signal d'ondes électromagnétiques reçu S1 et au fait que le cinquième moyen MCC de comparaison a déterminé que la première adresse C1 de terminal extraite comprend la deuxième adresse C2 de terminal. L'émetteur 10 analyse par le moyen 15 le quatrième signal d'ondes électromagnétiques S4 pour en extraire l'intensité ayant été mesurée. Le troisième moyen MD2 de détermination dans l'émetteur 10 détermine la deuxième valeur D représentative de la distance existant entre le terminal 20 et l'émetteur 10 à partir de l'intensité ayant été mesurée. L'émetteur 10 envoie par le moyen 12 un cinquième signal d'ondes électromagnétiques S5 contenant la deuxième valeur D ayant été déterminée et la deuxième adresse C2 de terminal contenue dans le quatrième signal S4 en réponse au quatrième signal S4. Le terminal 20 comportant la mémoire 23 dans laquelle est enregistrée la première valeur DMAX, et analyse par son moyen MA le signal S5 pour en extraire la deuxième valeur D associée à la deuxième adresse C2 de terminal. Le terminal 20 comporte le sixième moyen MCD de comparaison entre la deuxième distance D ayant été déterminée et la première valeur DMAX. Les comparaisons par les moyens MCD et MCC dans le terminal 20 permettent d'actionner l'élément 22 d'alerte, par le premier moyen MCA de commande lorsqu'à la fois la première adresse C1 de terminal extraite comprend la deuxième adresse C2 de terminal et la deuxième valeur D est inférieure à la première valeur DMAX.

Dans ce qui précède, les moyens 11, 12, MR, sont des moyens d'émission sans fil de leur signal.

Le balisage effectué par l'invention sera par exemple actif tout le long des opérations de contrôle (dès le démarrage et ce jusqu'à la fin de l'activité, et ce quel que soit le mode de travail de la source de chaque activité (en stockage ou en émission).

Dans un mode de réalisation, chaque opérateur P1, P2 sera muni d'un terminal 20 ou 120 sous la forme d'un boitier récepteur pouvant être sous la forme d'un bracelet au poignet ou autre. Par exemple, le terminal émettra un signal sonore et vibratoire dont l'amplitude sera progressive dès lors que l'opérateur s'approchera de l'émetteur placé à proximité de la source radioactive qui ne fera pas partie de son activité.

Dans un exemple d'application, il peut être prévu, en plus du dispositif de balisage suivant l'invention, une balise sentinelle qui une fois placée à proximité de la source est activée et signale à l'opérateur l'état de la source radioactive (position de stockage ou position d'éjection - émission de radiation).

Dans un exemple d'application, l'émetteur peut être donc incorporé à cette balise sentinelle et activé avec la balise sentinelle.

Dans un exemple d'application, lors des préparations de la soudure (pose de la cassette radiographique par exemple), un opérateur P1 est amené à pénétrer dans sa zone Z1 d'opération. Le terminal 120 de cet opérateur P1 ne devra donc pas émettre d'alerte sachant que cet opérateur P1 connaît l'état de sa source radioactive (qui sera en position stockage). Le terminal 120 de cet opérateur P1 devra être accordé (sous la forme indiquée ci-dessus) à l'émetteur 10 de l'autre activité. Dans l'hypothèse dans laquelle, trois activités sont menées en parallèles, le terminal 20 ou 120 d'une activité sera donc accordé aux deux autres activités. L'invention peut aussi être mis en oeuvre pour du personnel (rondier, surveillant, soudeur, ...) d'autres activités hors radiographie. L'invention permet ainsi une augmentation significative de la productivité de la centrale grâce à une diminution des jours de maintenance. L'invention permet également de pallier au manque crucial de créneaux horaires pour les opérations de contrôle par radiographie.

## Revendications

1. Dispositif de balisage d'une zone (Z1) d'accès restreint, le dispositif comportant
un émetteur (10) comportant un premier moyen (11) d'émission sans fil d'au moins un premier signal d'ondes électromagnétiques (S1) et destiné à être disposé dans la zone (Z1) d'accès restreint,
au moins un terminal (20) portatif, destiné à être porté par une personne et comportant un premier moyen (21) de réception du premier signal d'ondes électromagnétiques (S1), le terminal (20) étant muni d'au moins un élément (22) d'alerte de la personne, apte à être actionné par un premier moyen (MCA) de commande sur la base au moins du premier signal d'ondes électromagnétiques reçu (S1),
**caractérisé en ce que** l'émetteur (10) comporte un deuxième moyen (12) d'émission d'au moins un deuxième signal d'ondes électromagnétiques (S2) qui contient au moins une première adresse (C1) de terminal,
le terminal (20) ayant une mémoire (23) dans laquelle est enregistrée au moins une deuxième adresse (C2) de terminal, au moins une première valeur (DMAX), qui est représentative d'un seuil de distance d'accès restreint étant mémorisée dans la mémoire (23) du terminal (20) et/ou dans une mémoire de l'émetteur (10),
un troisième moyen (MD) de détermination d'une deuxième valeur (D) représentative de la distance (D) existant entre le terminal (20) et l'émetteur (10) sur la base au moins du premier et/ou deuxième signal d'ondes électromagnétiques (S1, S2) transmis de l'émetteur (10) au terminal (20) étant prévu dans le terminal (20) et/ou dans l'émetteur (10),
un quatrième moyen (MA) d'analyse du deuxième signal d'ondes électromagnétiques reçu (S2) pour en extraire la première adresse (C1) de terminal étant prévu dans le terminal (20),
un cinquième moyen (MCC) de comparaison entre la deuxième adresse (C2) de terminal et la première adresse (C1) de terminal extraite du deuxième signal d'ondes électromagnétiques reçu (S2) pour déterminer si la première adresse (C1) de terminal extraite comprend la deuxième adresse (C2) de terminal étant prévu dans le terminal (20),
un sixième moyen (MCD) de comparaison entre la deuxième distance (D) ayant été déterminée et la première valeur (DMAX) étant prévu dans le terminal (20) et/ou dans l'émetteur (10),
le premier moyen (MCA) de commande coopérant avec les cinquième et sixième moyens (MCC, MCD) de comparaison pour actionner l'élément (22) d'alerte lorsqu'à la fois la première adresse (C1) de terminal extraite comprend la deuxième adresse (C2) de terminal et la deuxième valeur (D) est inférieure à la première valeur (DMAX).

2. Dispositif de balisage suivant la revendication 1, **caractérisé en ce que** le troisième moyen (MD) de détermination est situé dans le terminal (20) et comporte un moyen (MI) de mesure de l'intensité du premier signal d'ondes électromagnétiques reçu (S1) pour déterminer la deuxième valeur (D) représentative de la distance existant entre le terminal (20) et l'émetteur (10) à partir de cette intensité ayant été mesurée.

3. Dispositif de balisage suivant la revendication 1, **caractérisé en ce que**
le troisième moyen (MD) de détermination est situé dans l'émetteur (10) et dans le terminal (20),
le terminal (20) comportant un septième moyen (MR) de réponse pour envoyer un troisième signal d'ondes électromagnétiques (S3) et un quatrième signal d'ondes électromagnétiques (S4) contenant la deuxième adresse (C2) de terminal à l'émetteur (10), en réponse au premier signal d'ondes électromagnétiques reçu (S1) et au fait que le cinquième moyen (MCC) de comparaison a déterminé que la première adresse (C1) de terminal extraite comprend la deuxième adresse (C2) de terminal,
le troisième moyen (MD) de détermination comportant dans l'émetteur (10) un moyen de mesure du temps (TT) de trajet des premier et troisième signaux d'ondes électromagnétiques (S1, S3) entre l'émetteur (10) et le terminal (20), et un moyen (12) d'envoi d'un cinquième signal d'ondes électromagnétiques (S5) contenant le temps (TT) de trajet ayant été mesuré et la deuxième adresse (C2) de terminal contenue dans le quatrième signal (S4) au terminal (20) en réponse au quatrième signal (S4),
le deuxième moyen (MD) de détermination comportant dans le terminal (20) un moyen (MA) d'analyse du cinquième signal d'ondes électromagnétiques reçu (S5) pour en extraire le temps (TT) de trajet ayant été mesuré pour déterminer la deuxième valeur (D) représentative de la distance existant entre le terminal (20) et l'émetteur (10) à partir de ce temps (TT) de trajet ayant été mesuré.

4. Dispositif de balisage suivant la revendication 1, **caractérisé en ce que**
le troisième moyen (MD, MD2) de détermination est situé dans l'émetteur (10),
le terminal (20) comportant un septième moyen (MR) de réponse pour envoyer un troisième signal d'ondes électromagnétiques (S3) et un quatrième signal d'ondes électromagnétiques (S4) contenant la deuxième adresse (C2) de terminal à l'émetteur (10), en réponse au premier signal d'ondes électromagnétiques reçu (S1) et au fait que le cinquième moyen (MCC) de comparaison a déterminé que la première adresse (C1) de terminal extraite comprend la deuxième adresse (C2) de terminal,
le troisième moyen (MD, MD2) de détermination comportant un moyen (MTT) de mesure du temps (TT) de trajet des premier et troisième signaux d'ondes électromagnétiques (S1, S3) entre l'émetteur (10) et le terminal (20) pour déterminer la deuxième valeur (D) représentative de la distance existant entre le terminal (20) et l'émetteur (10) à partir de ce temps (TT) de trajet ayant été mesuré, et un moyen (12) d'envoi d'un cinquième signal d'ondes électromagnétiques (S5) contenant la deuxième valeur (D) et la deuxième adresse (C2) de terminal contenue dans le quatrième signal (S4) au terminal (20), en réponse au quatrième signal (S4),
le terminal (20) comportant un moyen (MA) d'analyse du cinquième signal d'ondes électromagnétiques reçu (S5) pour en extraire la deuxième valeur (D) associée à la deuxième adresse (C2) de terminal contenue dans ce cinquième signal d'ondes électromagnétiques reçu (S5).

5. Dispositif de balisage suivant la revendication 1, **caractérisé en ce que**
le troisième moyen (MD) de détermination est situé dans l'émetteur (10) et dans le terminal (20),
le terminal (20) comportant un septième moyen (MR) de réponse pour envoyer un troisième signal d'ondes électromagnétiques (S3) et un quatrième signal d'ondes électromagnétiques (S4) contenant la deuxième adresse (C2) de terminal à l'émetteur (10), en réponse au premier signal d'ondes électromagnétiques reçu (S1) et au fait que le cinquième moyen (MCC) de comparaison a déterminé que la première adresse (C1) de terminal extraite comprend la deuxième adresse (C2) de terminal,
l'émetteur (10) comportant la mémoire dans laquelle est enregistrée la première valeur (DMAX), le troisième moyen (MD) de détermination de la deuxième valeur (D) représentative de la distance (D) existant entre le terminal (20) et l'émetteur (10) et le sixième moyen (MCD) de comparaison entre la deuxième distance (D) ayant été déterminée et la première valeur (DMAX), apte à générer une commande d'actionnement dans le cas où la deuxième valeur (D) est inférieure à la première valeur (DMAX),
le troisième moyen (MD) de détermination comportant dans l'émetteur (10) un moyen de mesure du temps (TT) de trajet des premier et troisième signaux d'ondes électromagnétiques (S1, S3) entre l'émetteur (10) et le terminal (20),
le troisième moyen (MD) de détermination dans l'émetteur (10) étant apte à déterminer la deuxième valeur (D) représentative de la distance existant entre le terminal (20) et l'émetteur (10) à partir du temps (TT) de trajet ayant été mesuré,
l'émetteur (10) ayant un moyen (12) d'envoi d'un cinquième signal d'ondes électromagnétiques (S5) contenant la commande d'actionnement et la deuxième adresse (C2) de terminal contenue dans le quatrième signal (S4) au terminal (20) en réponse au quatrième signal (S4) et au fait que la deuxième valeur (D) est inférieure à la première valeur (DMAX),
le premier moyen (MCA) de commande comportant dans le terminal (20) un moyen (MA) d'analyse du cinquième signal d'ondes électromagnétiques reçu (S5) pour en extraire la commande d'actionnement et la deuxième adresse (C2) de terminal contenue dans le quatrième signal (S4) et pour actionner l'élément (22) d'alerte lorsque la commande d'actionnement et la deuxième adresse (C2) de terminal sont présentes dans le quatrième signal (S4).

6. Dispositif de balisage suivant la revendication 1, **caractérisé en ce que** le troisième moyen (MD) de détermination est situé dans le terminal (20) et dans l'émetteur (10) et comporte dans le terminal (20) un moyen (MI) de mesure de l'intensité du premier signal d'ondes électromagnétiques reçu (S1) et un septième moyen (MR) de réponse pour envoyer un quatrième signal d'ondes électromagnétiques (S4) contenant l'intensité ayant été mesurée du premier signal d'ondes électromagnétiques reçu (S1) et la deuxième adresse (C2) de terminal à l'émetteur (10), en réponse au premier signal d'ondes électromagnétiques reçu (S1) et au fait que le cinquième moyen (MCC) de comparaison a déterminé que la première adresse (C1) de terminal extraite comprend la deuxième adresse (C2) de terminal,
l'émetteur (10) comportant un moyen (15) d'analyse du quatrième signal d'ondes électromagnétiques (S4) pour en extraire l'intensité ayant été mesurée,
le troisième moyen (MD2) de détermination dans l'émetteur (10) étant apte à déterminer la deuxième valeur (D) représentative de la distance existant entre le terminal (20) et l'émetteur (10) à partir de l'intensité ayant été mesurée,
l'émetteur (10) comportant la mémoire dans laquelle est enregistrée la première valeur (DMAX), et le sixième moyen (MCD) de comparaison entre la deuxième distance (D) ayant été déterminée et la première valeur (DMAX), apte à générer une commande d'actionnement dans le cas où la deuxième valeur (D) est inférieure à la première valeur (DMAX),
l'émetteur (10) ayant un moyen (12) d'envoi d'un cinquième signal d'ondes électromagnétiques (S5) contenant la commande d'actionnement et la deuxième adresse (C2) de terminal contenue dans le quatrième signal (S4) au terminal (20) en réponse au quatrième signal (S4) et au fait que la deuxième valeur (D) est inférieure à la première valeur (DMAX),
le premier moyen (MCA) de commande comportant dans le terminal (20) un moyen (MA) d'analyse du cinquième signal d'ondes électromagnétiques reçu (S5) pour en extraire la commande d'actionnement et la deuxième adresse (C2) de terminal contenue dans le quatrième signal (S4) et pour actionner l'élément (22) d'alerte lorsque la commande d'actionnement et la deuxième adresse (C2) de terminal sont présentes dans le quatrième signal (S4).

7. Dispositif de balisage suivant la revendication 1, **caractérisé en ce que** le troisième moyen (MD) de détermination est situé dans le terminal (20) et dans l'émetteur (10) et comporte dans le terminal (20) un moyen (MI) de mesure de l'intensité du premier signal d'ondes électromagnétiques reçu (S1) et un septième moyen (MR) de réponse pour envoyer un quatrième signal d'ondes électromagnétiques (S4) contenant l'intensité ayant été mesurée du premier signal d'ondes électromagnétiques reçu (S1) et la deuxième adresse (C2) de terminal à l'émetteur (10), en réponse au premier signal d'ondes électromagnétiques reçu (S1) et au fait que le cinquième moyen (MCC) de comparaison a déterminé que la première adresse (C1) de terminal extraite comprend la deuxième adresse (C2) de terminal,
l'émetteur (10) comportant un moyen (15) d'analyse du quatrième signal d'ondes électromagnétiques (S4) pour en extraire l'intensité ayant été mesurée,
le troisième moyen (MD2) de détermination dans l'émetteur (10) étant apte à déterminer la deuxième valeur (D) représentative de la distance existant entre le terminal (20) et l'émetteur (10) à partir de l'intensité ayant été mesurée,
l'émetteur (10) ayant un moyen (12) d'envoi d'un cinquième signal d'ondes électromagnétiques (S5) contenant la deuxième valeur (D) ayant été déterminée et la deuxième adresse (C2) de terminal contenue dans le quatrième signal (S4) en réponse au quatrième signal (S4),
le terminal (20) comportant la mémoire (23) dans laquelle est enregistrée la première valeur (DMAX), un moyen (MA) d'analyse pour extraire du cinquième signal d'ondes électromagnétiques (S5) la deuxième valeur (D) associée à la deuxième adresse (C2) de terminal dans le quatrième signal (S4) et le sixième moyen (MCD) de comparaison entre la deuxième distance (D) ayant été déterminée et la première valeur (DMAX).

8. Dispositif de balisage suivant l'une quelconque des revendications précédentes, **caractérisé en ce que** le premier moyen (MCA) de commande coopère avec les cinquième et sixième moyens (MCC, MCD) de comparaison pour ne pas actionner l'élément (22) d'alerte de la personne lorsque la première adresse (C1) de terminal extraite ne comprend pas la deuxième adresse (C2) de terminal.

9. Dispositif de balisage suivant l'une quelconque des revendications précédentes, **caractérisé en ce que** le premier moyen (MCA) de commande coopère avec les cinquième et sixième moyens (MCC, MCD) de comparaison pour ne pas actionner l'élément d'alerte de la personne lorsque la deuxième valeur (D) est supérieure à la première valeur (DMAX).

10. Dispositif de balisage suivant l'une quelconque des revendications précédentes, **caractérisé en ce qu'**une pluralité de terminaux (20) sont prévus, chaque deuxième adresse (C2) de terminal enregistrée dans la mémoire de chaque terminal (20) étant individuelle à ce terminal et étant différente de celles des autres terminaux (20).

11. Dispositif de balisage suivant la revendication précédente, **caractérisé en ce que** le deuxième signal d'ondes électromagnétiques (S2) contient comme première adresse (C1) de terminal plusieurs premières adresses (C1) de terminal différentes.

12. Dispositif de balisage suivant l'une quelconque des revendications précédentes, **caractérisé en ce que** il est prévu, comme terminal, au moins un terminal, appelé premier terminal (20), comportant dans sa mémoire (23) la deuxième adresse (C2) de terminal comprise dans la première adresse (C1) de terminal, et au moins un autre terminal, appelé deuxième terminal (120) comportant dans sa mémoire (23) la deuxième adresse (C2) de terminal non comprise dans la première adresse (C1) de terminal.

13. Dispositif de balisage suivant la revendication 1, **caractérisé en ce que** le troisième moyen (MD) de détermination est situé dans le terminal (20) et comporte un moyen de mesure du temps (TT) de trajet du premier et/ou deuxième signal d'ondes électromagnétiques (S1, S2) entre l'émetteur (10) et le terminal (20) à partir d'une même référence temporelle présente dans l'émetteur (10) et le terminal (20) et synchronisée entre l'émetteur (10) et le terminal (20),
le premier et/ou deuxième signal d'ondes électromagnétiques (S1, S2) contenant en outre un premier indicateur temporel indiquant l'instant d'émission de ce premier et/ou deuxième signal (S1, S2),
le moyen de mesure du temps (TT) de trajet comportant dans le terminal (20) un moyen (MA) d'analyse du premier et/ou deuxième signal d'ondes électromagnétiques (S1, S2) reçu pour en extraire le premier indicateur temporel, ainsi qu'un moyen de détermination d'un deuxième indicateur temporel indiquant l'instant de réception du premier et/ou deuxième signal d'ondes électromagnétiques (S1, S2) contenant le premier indicateur temporel, pour déterminer la deuxième valeur (D) représentative de la distance existant entre le terminal (20) et l'émetteur (10) à partir des premier et deuxième indicateurs temporels.

14. Dispositif de balisage suivant l'une quelconque des revendications précédentes, **caractérisé en ce que** le premier signal (S1) et le deuxième signal (S2) sont un seul et même signal.

15. Procédé de balisage d'une zone (Z1) d'accès restreint à l'aide du dispositif de balisage suivant l'une quelconque des revendications précédentes, procédé dans lequel
l'émetteur (10) disposé dans la zone (Z1) d'accès restreint émet sans fil au moins un premier signal d'ondes électromagnétiques (S1),
le terminal (20) portatif porté par une personne reçoit le premier signal d'ondes électromagnétiques (S1),
**caractérisé en ce que** l'émetteur (10) émet au moins un deuxième signal d'ondes électromagnétiques (S2) qui contient au moins une première adresse (C1) de terminal,
le terminal (20) ayant une mémoire (23) dans laquelle est préenregistrée au moins une deuxième adresse (C2) de terminal, au moins une première valeur (DMAX), qui est représentative d'un seuil de distance d'accès restreint étant préenregistrée dans la mémoire (23) du terminal (20) et/ou dans une mémoire de l'émetteur (10),
le terminal (20) et/ou l'émetteur (10) détermine une deuxième valeur (D) représentative de la distance (D) existant entre le terminal (20) et l'émetteur (10) sur la base au moins du premier signal d'ondes électromagnétiques (S1) transmis de l'émetteur (10) au terminal (20),
le terminal (20) analyse le deuxième signal d'ondes électromagnétiques reçu (S2) pour en extraire la première adresse (C1) de terminal,
le terminal (20) effectue une comparaison entre la deuxième adresse (C2) de terminal et la première adresse (C1) de terminal extraite du premier signal d'ondes électromagnétiques reçu (S1) pour déterminer si la première adresse (C1) de terminal extraite comprend la deuxième adresse (C2) de terminal,
le terminal (20) et/ou dans l'émetteur effectue une comparaison entre la deuxième distance (D) ayant été déterminée et la première valeur (DMAX),
le terminal (20), ayant un élément (22) d'alerte pour la personne, actionne cet élément (22) d'alerte lorsqu'à la fois la première adresse (C1) de terminal extraite comprend la deuxième adresse (C2) de terminal et la deuxième valeur (D) est inférieure à la première valeur (DMAX).
